# EUROPEAN PATENT APPLICATION

(11) **EP 2 781 914 A1**
(43) Date of publication of application: **24.09.2014**
(21) Application number: 12849013.3
(22) Date of filing: 10.07.2012
(51) Int. Cl.: G01N 27/416, G01N 27/327

(54) **METHOD FOR MEASURING HEMATOCRIT LEVELS, QUANTITATIVE ANALYSIS METHOD USING SAID MEASUREMENT METHOD, AND SENSOR CHIP**

(30) Priority: 18.11.2011 JP 2011252763
(71) Applicant: Murata Manufacturing Co., Ltd., Kyoto 617-8555 (JP)
(72) Inventor: OOE, Hideaki, Nagaokakyo-shi Kyoto 617-8555 (JP); TAKAGI, Jun, Nagaokakyo-shi Kyoto 617-8555 (JP); YOKOYAMA, Kenji, Tokyo 100-8921 (JP); HIRATSUKA, Atsunori, Tokyo 100-8921 (JP); YOSHIDA, Nobuyuki, Tokyo 100-8921 (JP); SASAKI, Noriko, Tokyo 100-8921 (JP)
(74) Representative: Herrmann, Uwe
(86) International application number: PCT/JP2012/004440
(87) International publication number: WO 2013/073072

(57) **Abstract**

A technique and a sensor chip allowing determination of a hematocrit value of a blood sample in a short period of time with low cost are provided. A response current obtained by sweep of a voltage applied across a working electrode for determination and a counter electrode for determination included in a sensor chip is measured and a hematocrit value is derived based on followability of the response current to temporal change in swept applied voltage. Therefore, it is not necessary to stand by until oxidation reduction reaction of an oxidation reducing substance is stabilized for determining a hematocrit value as in a conventional method of determining a hematocrit value, and thus a hematocrit value of a blood sample can be determined in a short period of time. Since no oxidation reducing substance is necessary for determining a hematocrit value, a hematocrit value can be determined with low cost.

## Description

### TECHNICAL FIELD

The present invention relates to a method of determining a hematocrit value (Hct) of a blood sample with the use of a sensor chip including an electrode system including a working electrode for determination and a counter electrode for determination and a quantitative analysis method with this determination method as well as to a sensor chip used in the determination method and the quantitative analysis method.

### BACKGROUND ART

A quantitative analysis method of quantifying a substance to be determined such as glucose contained in a blood sample with the use of a sensor chip having an electrode system including a working electrode and a counter electrode and a reaction layer containing an enzyme specifically reacting with the substance to be determined has conventionally been known. Namely, a substance to be determined is quantified by measuring an oxidation current resulting from oxidation, by application of a voltage across the working electrode and the counter electrode, of a reducing substance generated through reaction between the substance to be determined and the reaction layer.

The sensor chip is formed by stacking an electrode layer obtained by providing an electrode on an insulating substrate composed of polyethylene terephthalate, a cover layer, and a spacer layer arranged between the electrode layer and the cover layer. A slit for forming a cavity into which a blood sample is to be supplied is provided in the spacer layer. As the cover layer is stacked on and bonded to the electrode layer with the spacer layer being interposed, the cavity into which the blood sample is to be supplied is formed by the electrode layer and the cover layer and by a slit portion in the spacer layer, and a sample introduction port is formed in a side surface of the sensor chip. When the blood sample is supplied into the cavity through the sample introduction port, the blood sample is supplied into the cavity owing to a capillary phenomenon. Therefore, an air vent communicating with a terminal portion of the formed cavity is formed in the cover layer.

As the working electrode and the counter electrode as well as an electrode pattern electrically connected to the working electrode and the counter electrode are provided in the electrode layer, the electrode system is formed on the electrode layer. The working electrode and the counter electrode are provided on the electrode layer such that they are partially exposed at the cavity formed in the sensor chip, and the reaction layer is provided on a part of the working electrode and the counter electrode exposed at the cavity. Therefore, as a blood sample is supplied into the cavity through the sample introduction port, the blood sample comes in contact with each electrode and the reaction layer exposed at the cavity, and the reaction layer is dissolved in the blood sample.

The reaction layer provided on the working electrode and the counter electrode contains, for example, glucose oxidase specifically reacting with glucose contained in the blood sample and potassium ferricyanide serving as a mediator (electron acceptor). Then, ferricyanide ions resulting from solution of potassium ferricyanide in the blood sample are reduced to ferrocyanide ions representing a reductant by electrons emitted at the time of reaction of glucose with glucose oxidase and following oxidation into gluconolactone. Therefore, as the blood sample containing glucose is supplied through the sample introduction port into the cavity formed in the sensor chip, ferricyanide ions are reduced by electrons emitted as a result of oxidation of glucose, and hence ferrocyanide ions representing a reductant of ferricyanide ions are generated in an amount in accordance with a concentration of glucose contained in the blood sample and oxidized through enzyme reaction.

According to the sensor chip as such, magnitude of an oxidation current resulting from oxidation of a reductant of a mediator resulting from enzyme reaction on the working electrode is dependent on a concentration of glucose in the blood sample. Therefore, glucose contained in the blood sample can be quantified by measuring this oxidation current.

A blood sample contains such blood cells as red blood cells, and magnitude of an oxidation current has been known to be affected by magnitude of a hematocrit value representing a volume ratio of blood cells in the blood sample. In recent years, accurate quantitative analysis of a substance to be determined in a blood sample in a short period of time with the use of a small amount of blood sample has been demanded, and a cavity of a smaller volume is formed in the sensor chip such that a small amount of blood sample is supplied. Therefore, since a volume of a cavity formed in the sensor chip is small and an amount of blood sample used for determination is small, magnitude of an oxidation current to be measured is small. Though an oxidation current measured with the sensor chip has an error dependent on a hematocrit value of the blood sample, magnitude of an oxidation current to be measured is small and a ratio of an error in an oxidation current which is dependent on a hematocrit value is relatively high. Therefore, the error dependent on the hematocrit value is unignorable.

Then, in measurement of an oxidation current and a hematocrit value of a blood sample and quantitative analysis of a substance to be determined based on magnitude of the measured oxidation current, correction based on the determined hematocrit value is made in order to achieve higher accuracy in quantitative analysis of the substance to be determined in the blood sample. For example, PTD 1 describes a method of measuring an oxidation reduction current of an oxidation reducing substance such as a mediator resulting from application of a voltage in a stepwise manner to a working electrode and a counter electrode and deriving a hematocrit value based on the measured oxidation reduction current.

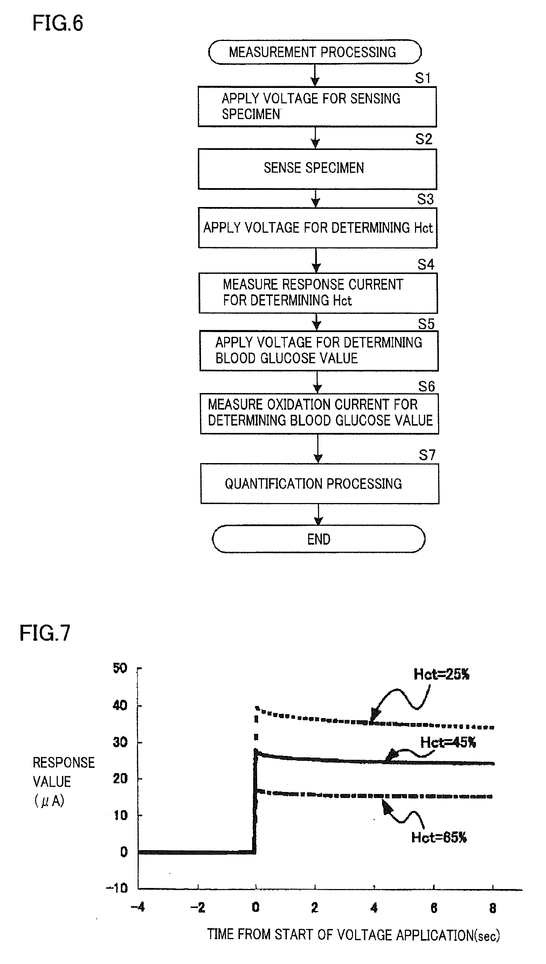

Namely, some of an oxidation reducing substance such as a mediator is absorbed in red blood cells when a reaction layer is dissolved in a blood sample, however, the oxidation reducing substance absorbed in the red blood cells is not oxidized or reduced by application of a voltage across a working electrode and a counter electrode. Therefore, as shown in one example of a response current in a conventional method of determining a hematocrit value in Fig. 7, when a hematocrit value (Hct) of a blood sample is high, an amount of an oxidation reducing substance absorbed in red blood cells increases and hence an amount of an oxidation reducing substance oxidized or reduced in a cavity of a sensor chip is relatively small. Therefore, an oxidation reduction current resulting from application of a voltage across a working electrode and a counter electrode is low.

When a hematocrit value (Hct) of a blood sample is low, an amount of an oxidation reducing substance absorbed in red blood cells decreases and hence an amount of an oxidation reducing substance oxidized or reduced in a cavity of a sensor chip is relatively large. Therefore, an oxidation reduction current of an oxidation reducing substance resulting from application of a voltage across a working electrode and a counter electrode is high. Therefore, a hematocrit value of a blood sample can be determined by measuring an oxidation reduction current of an oxidation reducing substance resulting from application of a voltage across a working electrode and a counter electrode.

### CITATION LIST

### PATENT DOCUMENT

PTD 1: WO08/047843 (paragraphs 0002 to 0006, Figs. 7 to 13, and Abstract)

### SUMMARY OF INVENTION

### TECHNICAL PROBLEM

In the conventional method of determining a hematocrit value described above, an oxidation reduction current at the time of oxidation reduction reaction of an oxidation reducing substance is measured as a voltage is applied in a stepwise manner to the working electrode and the counter electrode. Immediately after application of a voltage in a stepwise manner to the working electrode and the counter electrode, a large amount of current different from an oxidation reduction current to be measured, such as a charging current for an electric double layer, is produced. Therefore, in order to accurately measure an oxidation reduction current of an oxidation reducing substance to be measured, it is necessary to stand by until oxidation reduction reaction of the oxidation reducing substance is stabilized to some extent after application of the voltage to the working electrode and the counter electrode, which has interfered reduction in time period for measuring a hematocrit value of a blood sample.

In determining a hematocrit value of a blood sample, an oxidation reduction current resulting from oxidation reduction reaction of an oxidation reducing substance through application of a voltage across a working electrode and a counter electrode is measured. Therefore, an oxidation reducing substance is necessary for determining a hematocrit value of a blood sample, and increase in cost for determining a hematocrit value has been caused.

This invention was made in view of the problems above, and an object thereof is to provide a technique and a sensor chip allowing determination of a hematocrit value of a blood sample in a short period of time with low cost.

### SOLUTION TO PROBLEM

In order to achieve the object described above, a method of determining a hematocrit value according to the present invention is a method of determining a hematocrit value of a blood sample by using a sensor chip including an electrode system including a working electrode for determination and a counter electrode for determination. A response current obtained by sweeping a voltage applied across the working electrode for determination and the counter electrode for determination is measured, and a hematocrit value is derived based on followability of the response current to temporal change in swept applied voltage (claim 1).

Desirably, the applied voltage is swept such that it increases in a positive direction (claim 2).

Desirably, the hematocrit value is calculated based on a rate of increase in current value of the response current at least at two time points (claim 3).

Desirably, the hematocrit value is calculated based on a ratio of current values of the response current at least at two time points (claim 4).

Desirably, at least one of the current values is a measurement value at the time when the applied voltage is lower than a decomposition voltage of water and at least one thereof is a measurement value at the time when the applied voltage is equal to or higher than the decomposition voltage of water (claim 5).

Desirably, the applied voltage is swept such that it linearly increases (claim 6).

The applied voltage may be swept such that it linearly increases at a rate of increase in a range from 1 V/second to 100 V/second (claim 7).

A quantitative analysis method according to the present invention includes the steps of determining a hematocrit value of a blood sample by using the method of determining a hematocrit value according to any of claims 1 to 7, measuring an oxidation current resulting from oxidation, by applying a voltage across a working electrode for quantification and a counter electrode for quantification in the electrode system, a reducing substance generated through reaction between a substance to be determined in the blood sample and a reaction layer containing an enzyme specifically reacting with the substance to be determined, and quantifying the substance to be determined based on the hematocrit value and the oxidation current (claim 8).

A sensor chip according to the present invention is formed by stacking an electrode layer, a cover layer, and a spacer layer arranged between the electrode layer and the cover layer, and includes a cavity formed by the electrode layer and the cover layer and by a slit formed in the spacer layer and a sample introduction port communicating with the cavity. The electrode layer is provided with an electrode system including a working electrode for determination and a counter electrode for determination as well as a working electrode for quantification and a counter electrode for quantification such that each electrode is partially exposed at the cavity. A set of the working electrode for determination and the counter electrode for determination is arranged on an upstream side closer to the sample introduction port, a set of the working electrode for quantification and the counter electrode for quantification is arranged on a downstream side farther from the sample introduction port, and a reaction layer containing an enzyme specifically reacting with a substance to be determined which is contained in a blood sample is provided in the cavity as arranged downstream of the set of the working electrode for determination and the counter electrode for determination (claim 9).

### ADVANTAGEOUS EFFECTS OF INVENTION

The inventors of the present application repeatedly determined a response current at the time when a voltage is applied to a blood sample across a working electrode for determination and a counter electrode for determination. Consequently, the inventors of the present application found that followability of a response current obtained at the time when a voltage applied across a working electrode for determination and a counter electrode for determination is swept, to temporal change in swept applied voltage, was dependent on a hematocrit value of a blood sample.

When a voltage is applied to a blood sample across a working electrode for determination and a counter electrode for determination, a current which flows between the working electrode for determination and the counter electrode for determination is measured as a response current. The response current measured here is produced as a result of electrolysis of water or movement of such an ionic substance as red blood cells containing hydroxide ions (OH- ions) and hydrogen ions (H⁺ ions) or sodium ions (Na⁺ ions) between those electrodes.

As compared with OH ions or Na ions resulting from electrolysis of water, red blood cells representing an ionic substance are very slow in speed of movement through a blood sample at the time when a voltage is applied across a working electrode for determination and a counter electrode for determination. Therefore, followability of a response current resulting from sweep of a voltage applied across the working electrode for determination and the counter electrode for determination, to temporal change in swept applied voltage, is considered to be dependent on a hematocrit value of a blood sample. Namely, when a hematocrit value of a blood sample is high, a ratio in a blood sample, of red blood cells slow in moving speed at the time of application of a voltage, is high in a blood sample. Therefore, as a voltage applied across the working electrode for determination and the counter electrode for determination is swept, followability of a response current to temporal change in swept applied voltage is relatively poor. When a hematocrit value of a blood sample is low, a ratio in a blood sample, of red blood cells slow in moving speed at the time of application of a voltage is low. Therefore, as a voltage applied across the working electrode for determination and the counter electrode for determination is swept, followability of a response current to temporal change in swept applied voltage is relatively improved.

Therefore, according to the invention in claim 1, a response current obtained by sweeping a voltage applied across a working electrode for determination and a counter electrode for determination included in a sensor chip is measured and a hematocrit value is derived based on followability of the response current on temporal change in swept applied voltage. Therefore, it is not necessary to stand by until oxidation reduction reaction of an oxidation reducing substance is stabilized for determining a hematocrit value as in a conventional method of determining a hematocrit value, and a hematocrit value of a blood sample can be determined in a short period of time. Since no oxidation reducing substance is necessary for determining a hematocrit value, a hematocrit value can be determined with low cost.

According to the invention in claim 2, since the voltage applied across the working electrode for determination and the counter electrode for determination is swept such that it increases in the positive direction, a high voltage is applied across both electrodes from the beginning, and hence generation of a current resulting from electrochemical reaction of various substances in a blood sample can be prevented. Therefore, a capacitive current which flows between the working electrode for determination and the counter electrode for determination can accurately be measured as a response current.

According to the invention in claim 3, though a response current contains various background components different from a current component dependent on a hematocrit value, influence by the background components contained in the response current can be removed by deduction, by calculating a hematocrit value based on a rate of increase in current value of the response current at least at two time points.

According to the invention in claim 4, though a response current contains an error component dependent on an ambient temperature, temperature-dependent characteristics of the response current do not change even though a voltage applied across both electrodes is swept. An error component dependent on an ambient temperature, which is included in the response current, can be removed by calculating a hematocrit value based on a ratio of current values of the response current at least at two time points.

According to the invention in claim 5, when a hematocrit value is calculated based on a ratio of current values of the response current at least at two time points, at least one of the current values is a measurement value at the time when the applied voltage is lower than a decomposition voltage of water and at least one thereof is a measurement value at the time when the applied voltage is equal to or higher than the decomposition voltage of water. Since a ratio of a current component resulting from electrolysis of water is higher, a current component dependent on a hematocrit value, which is included in the response current in particular at the time when the applied voltage is lower than the decomposition voltage of water, can more effectively be measured, and accuracy in determining a hematocrit value can be improved.

According to the invention in claim 6, by sweeping the applied voltage such that it linearly increases, a voltage applied across the working electrode for determination and the counter electrode for determination can readily be swept with the use of an inexpensive and simplified circuit configuration, which is practical.

According to the invention in claim 7, a voltage applied across electrodes is rapidly swept such that it linearly increases at a rate of increase in a range from 1 V/second to 100 V/second. Thus, influence by red blood cells slow in moving speed in a blood sample more effectively appears in followability of a response current, and hence accuracy in determination of a hematocrit value based on measurement of a response current can be improved.

According to the invention in claim 8, since a substance to be determined is quantified based on a hematocrit value and an oxidation current of a reducing substance, the substance to be determined can accurately be quantified with influence by the hematocrit value of the blood sample being removed. Since a hematocrit value of a blood sample is determined in a short period of time and no oxidation reducing substance is necessary for determining a hematocrit value, a substance to be determined in a blood sample can be quantified based on a hematocrit value in a short period of time with low cost.

According to the invention in claim 9, an electrode system including a working electrode for determination and a counter electrode for determination as well as a working electrode for quantification and a counter electrode for quantification is provided on an electrode layer of a sensor chip such that each electrode is partially exposed at a cavity. Therefore, a sensor chip capable of measuring a response current resulting from sweep of a voltage applied across the working electrode for determination and the counter electrode for determination and determining a hematocrit value of a blood sample in a short period of time with low cost based on followability of the response current to temporal change in swept applied voltage can be provided.

A set of the working electrode for determination and the counter electrode for determination of the sensor chip is arranged on an upstream side closer to a sample introduction port, a set of the working electrode for quantification and the counter electrode for quantification is arranged on a downstream side farther from the sample introduction port, and a reaction layer containing an enzyme specifically reacting with a substance to be determined which is contained in a blood sample is provided in a cavity as arranged on downstream of the set of the working electrode for determination and the counter electrode for determination. Therefore, since the reaction layer is arranged downstream of the working electrode for determination and the counter electrode for determination at the time when the blood sample is supplied into the cavity through the sample introduction port, influence by a substance resulting from solution of the reaction layer in the blood sample on determination of a hematocrit value through application of a voltage across the working electrode for determination and the counter electrode for determination can be suppressed.

### BRIEF DESCRIPTION OF DRAWINGS

Fig. 1 is a diagram showing one example of a biosensor system employed in a quantitative analysis method according to the present invention.
Fig. 2 is a diagram showing one example of a sensor chip.
Fig. 3 is an enlarged view of a main portion of an electrode layer of the sensor chip.
Fig. 4 is a diagram showing one example of a potential applied to a working electrode for determination, with a counter electrode for determination being defined as a reference.
Fig. 5 is a diagram showing one example of a response current.
Fig. 6 is a flowchart showing one example of measurement processing.
Fig. 7 is a diagram showing one example of a response current in a conventional method of determining a hematocrit value.

### DESCRIPTION OF EMBODIMENTS

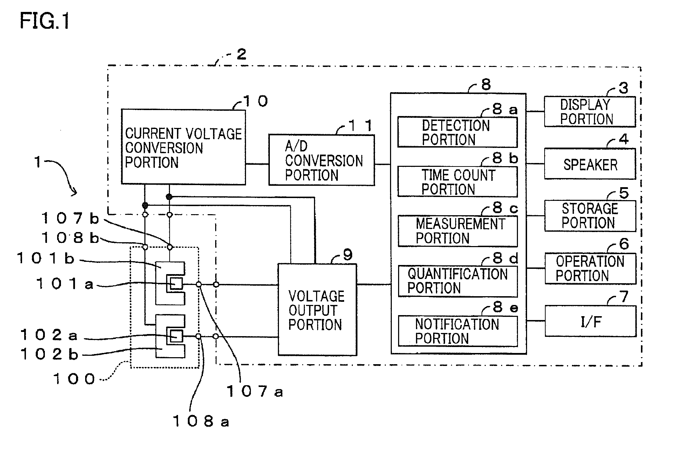

One embodiment of a quantitative analysis method according to the present invention will be described with reference to Figs. 1 to 6.

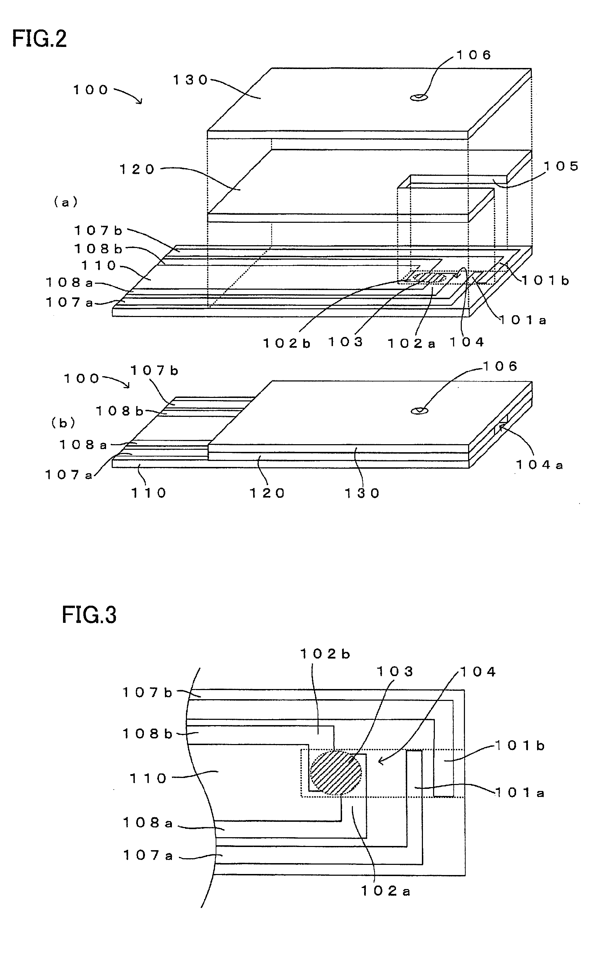

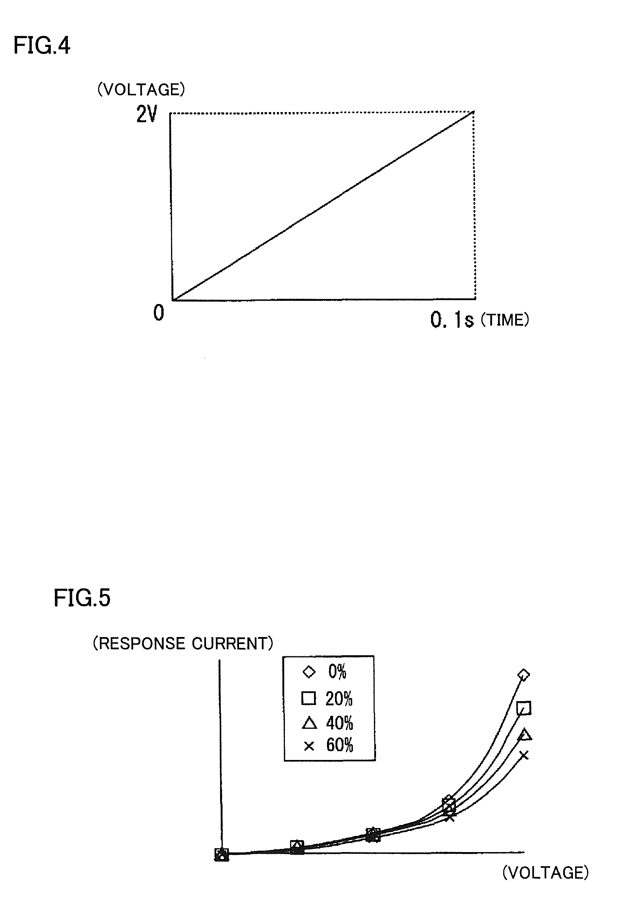

Fig. 1 is a diagram showing one example of a biosensor system employed in a quantitative analysis method according to the present invention. Fig. 2 is a diagram showing one example of a sensor chip, with (a) showing an exploded perspective view and (b) showing a perspective view. Fig. 3 is an enlarged view of a main portion of an electrode layer of the sensor chip. Fig. 4 is a diagram showing one example of a potential applied to a working electrode for determination, with a counter electrode for determination being defined as a reference. Fig. 5 is a diagram showing one example of a response current. Fig. 6 is a flowchart showing one example of measurement processing.

### <Biosensor System>

As shown in Figs. 1 to 3, a biosensor system 1 includes a sensor chip 100 having an electrode system including a working electrode for determination 101a and a counter electrode for determination 101b as well as a working electrode for quantification 102a and a counter electrode for quantification 102b and a reaction layer 103 containing an enzyme specifically reacting with a substance to be determined and a determination instrument 2 from/to which sensor chip 100 is removable/attachable. Biosensor system 1 quantifies a substance to be determined, which is contained in a blood sample, by measuring an oxidation current resulting from oxidation, by application of a voltage across working electrode for quantification 102a and a counter electrode for quantification 102b, of a reducing substance generated through reaction with reaction layer 103 provided in sensor chip 100, of the substance to be determined such as glucose which is contained in the blood sample supplied into a cavity 104 provided on a tip end side of sensor chip 100 attached to determination instrument 2.

Biosensor system 1 measures a response current resulting from sweep of a voltage applied to the blood sample supplied into cavity 104 across working electrode for determination 101a and counter electrode for determination 101b and derives a hematocrit value of the blood sample based on followability of the response current to temporal change in swept applied voltage.

When attachment of sensor chip 100 is detected, power of determination instrument 2 is automatically turned on, and as a blood sample such as blood is supplied to sensor chip 100, determination instrument 2 starts determination of a substance to be determined such as glucose in a blood sample. Then, when quantification of a substance to be determined in the blood sample is completed, a result of determination is displayed on a display portion 3 formed by such display means as an LCD, and an alarm indicating end of measurement is output from a speaker 4. The result of determination is stored in a storage portion 5 formed by such a storage medium as a memory.

Determination instrument 2 includes an operation portion 6 formed from an operation switch. As operation portion 6 is operated, various types of initial setting are made or results of past measurement stored in storage portion 5 are displayed on display portion 3.

Determination instrument 2 includes a serial interface 7 (I/F), and it can transmit and receive such data as determination results to and from an external personal computer connected through I/F 7. Storage portion 5 stores results of past determination, a conversion formula for deriving a hematocrit value of a blood sample based on a response current measured through application of a prescribed potential to working electrode for determination 101a of sensor chip 100, a conversion formula for quantifying a substance to be determined which is contained in a blood sample based on an oxidation current measured through application of a prescribed potential to working electrode for quantification 102a of sensor chip 100, and a program implementing various functions as it is executed by a CPU 8.

Determination instrument 2 includes a voltage output portion 9, a current voltage conversion portion 10, and an A/D conversion portion 11. Voltage output portion 9 has a digital-analog conversion function (D/A conversion function), and based on a control command from CPU 8, it outputs a constant reference potential to counter electrode for determination 101b and counter electrode for quantification 102b of sensor chip 100 attached to determination instrument 2, and outputs a prescribed potential referenced to a reference potential applied to counter electrode for determination 101b and counter electrode for quantification 102b to working electrode for determination 101a and working electrode for quantification 102a.

Current voltage conversion portion 10 has a common current voltage conversion circuit formed from an operational amplifier or a resistor, and it converts into a voltage signal, a response current which flows between working electrode for determination 101a and counter electrode for determination 101b and an oxidation current which flows between working electrode for quantification 102a and counter electrode for quantification 102b as a prescribed potential is applied to working electrode for determination 101a and working electrode for quantification 102a of sensor chip 100 from voltage output portion 9, such that the signal can be taken into CPU 8. A/D conversion portion 11 converts the voltage signal converted by current voltage conversion portion 10 into a digital signal. Then, the digital signal converted by A/D conversion portion 11 is taken into CPU 8 and subjected to prescribed operation in CPU 8. Thus, the digital signal is converted from a voltage signal into a current signal.

CPU 8 has functions below, by executing various programs stored in storage portion 5 for determining a hematocrit value of a blood sample and quantifying a substance to be determined which is contained in the blood sample.

A detection portion 8a detects change in resistance value due to short-circuiting between working electrode for determination 101a and counter electrode for determination 101b which is caused by a blood sample composed of a liquid and detects supply of the blood sample into cavity 104 provided in sensor chip 100, by monitoring a value for a current which flows between working electrode for determination 101a and counter electrode for determination 101b, which is input to CPU 8 through A/D conversion portion 11.

A time count portion 8b counts, for example, a time period which has elapsed since detection of supply of a blood sample into cavity 104 by detection portion 8a or a time period of application of a prescribed potential to working electrode for determination 101a and working electrode for quantification 102a from voltage output portion 9, based on a clock signal output from a not-shown clock circuit.

A measurement portion 8c measures a response current which flows between working electrode for determination 101a and counter electrode for determination 101b and an oxidation current which flows between working electrode for quantification 102a and counter electrode for quantification 102b at the time when a prescribed potential referenced to counter electrode for determination 101b and counter electrode for quantification 102b is applied to working electrode for determination 101a and working electrode for quantification 102a from voltage output portion 9. In this embodiment, measurement portion 8c measures a response current obtained at the time when voltage output portion 9 applies a voltage across working electrode for determination 101a and counter electrode for determination 101b, with the voltage being swept. At prescribed timing after supply of a blood sample to sensor chip 100, measurement portion 8c measures an oxidation current obtained at the time when voltage output portion 9 applies a prescribed potential referenced to counter electrode for quantification 102b to working electrode for quantification 102a.

A quantification portion 8d derives a hematocrit value based on followability of a response current measured by measurement portion 8c at the time when a voltage applied across working electrode for determination 101a and counter electrode for determination 101b from voltage output portion 9 is swept, to temporal change in swept applied voltage. Specifically, relation between a response current measured by measurement portion 8c at the time when a voltage applied across working electrode for determination 101a and counter electrode for determination 101b from voltage output portion 9 is swept and a hematocrit value of a blood sample is measured in advance, so that a conversion formula for calculating by conversion a hematocrit value from a rate of increase in response current measured by measurement portion 8c or a ratio of current values of the response current at least at two time points is derived and stored in advance in storage portion 5. Then, quantification portion 8d derives a hematocrit value of a blood sample based on the conversion formula stored in storage portion 5 from a rate of increase in response current measured by measurement portion 8c or a ratio of current values of the response current at least at two time points.

Quantification portion 8d quantifies a substance to be determined in a blood sample based on an oxidation current measured by measurement portion 8c at the time when a prescribed potential referenced to counter electrode for quantification 102b is applied to working electrode for quantification 102a from voltage output portion 9 at prescribed timing after supply of the blood sample into cavity 104. Specifically, relation between an oxidation current measured by measurement portion 8c at the time when a prescribed potential referenced to counter electrode for quantification 102b is applied to working electrode for quantification 102a from voltage output portion 9 and a concentration of a substance to be determined which is contained in the blood sample is measured in advance, so that a conversion formula for calculating by conversion a concentration from the oxidation current measured by measurement portion 8c is derived and stored in advance in storage portion 5. Then, quantification portion 8d quantifies a substance to be determined based on the conversion formula stored in storage portion 5 from the oxidation current measured by measurement portion 8c.

Magnitude of an oxidation current measured by measurement portion 8c at the time when a prescribed potential referenced to counter electrode for quantification 102b is applied from voltage output portion 9 to working electrode for quantification 102a is dependent on a concentration of a substance to be determined and a hematocrit value of a blood sample. Therefore, storage portion 5 stores a correction formula for correcting, based on a hematocrit value of the blood sample, a concentration calculated based on a conversion formula for calculating by conversion a concentration of a substance to be determined from magnitude of an oxidation current and a plurality of conversion formulae for calculating by conversion, a concentration of a substance to be determined for each hematocrit value. Then, a substance to be determined is quantified based on an oxidation current at the time when a prescribed voltage is applied across working electrode for quantification 102a and counter electrode for quantification 102b and a hematocrit value of a blood sample determined prior to measurement of this oxidation current.

A notification portion 8e gives notification by displaying a result of quantification by quantification portion 8d on display portion 3 or outputting an alarm indicating end of determination from speaker 4.

### <Sensor Chip>

As shown in Figs. 2 and 3, sensor chip 100 is formed in such a manner that an electrode layer 110 formed of an insulating material such as ceramics, glass, plastic, paper, a biodegradable material, or polyethylene terephthalate and provided with working electrode for determination 101a and counter electrode for determination 101b as well as working electrode for quantification 102a and counter electrode for quantification 102b, a cover layer 130 having an air vent 106 formed, and a spacer layer 120 having a slit 105 for forming cavity 104 formed and arranged between electrode layer 110 and cover layer 130 are stacked and bonded with their tip end sides being aligned as shown in Fig. 2 (a). Then, sensor chip 100 is attached to determination instrument 2 as it is introduced and attached through a prescribed port of determination instrument 2 from a rear end side.

In this embodiment, electrode layer 110 is formed from a substrate composed of polyethylene terephthalate. As a pattern is formed through laser processing or photolithography in an electrode film composed of such a noble metal as platinum, gold, or palladium or of such a conductive substance as carbon, copper, aluminum, titanium, ITO, or ZnO and formed on the substrate of electrode layer 110 through screen printing or sputtering vapor deposition, working electrode for determination 101a and counter electrode for determination 101b as well as working electrode for quantification 102a and counter electrode for quantification 102b and electrode patterns 107a, 107b, 108a, and 108b electrically connecting respective electrodes 101a, 101b, and 102a to determination instrument 2 are provided.

A set of working electrode for determination 101a and counter electrode for determination 101b is arranged on an upstream side closer to a sample introduction port 104a formed at a tip end of sensor chip 100 and a set of working electrode for quantification 102a and counter electrode for quantification 102b is arranged on a downstream side farther from sample introduction port 104a.

Spacer layer 120 is formed from a substrate composed of polyethylene terephthalate. Slit 105 for forming cavity 104 is formed substantially in a center of a tip edge portion of the substrate. Spacer layer 120 is stacked on and bonded to electrode layer 110 such that their tip ends are aligned as shown in Fig. 2 (a).

Reaction layer 103 is formed by dropping, before cover layer 130 is stacked, a reagent containing a thickening agent such as carboxymethylcellulose or gelatin, an enzyme, a mediator, an additive such as amino acid or an organic acid, onto working electrode for quantification 102a and counter electrode for quantification 102b formed as spacer layer 120 is stacked on electrode layer 110 and partially exposed at cavity 104. In order to smoothly supply a blood sample such as blood to cavity 104, a hydrophilizing agent such as a surfactant or phospholipid is applied to an inner wall of cavity 104.

Glucose oxidase, lactate oxidase, cholesterol oxidase, alcohol oxidase, sarcosine oxidase, fructosyl amine oxidase, pyruvic oxidase, glucose dehydrogenase, lactate dehydrogenase, alcohol dehydrogenase, hydroxybutyrate dehydrogenase, cholesterol esterase, creatininase, creatinase, or DNA polymerase can be employed as an enzyme, and various sensors can be formed by making selection in accordance with a substance to be determined, an enzyme for which is desirably detected.

For example, with glucose oxidase or glucose dehydrogenase, a glucose sensor for detecting glucose in a blood sample can be formed, with alcohol oxidase or alcohol dehydrogenase, an alcohol sensor for detecting ethanol in a blood sample can be formed, with lactate oxidase, a lactate sensor for detecting lactic acid in a blood sample can be formed, and with a mixture of cholesterol esterase and cholesterol oxidase, a total cholesterol sensor can be formed.

Potassium ferricyanide, ferrocene, a ferrocene derivative, benzoquinone, a quinone derivative, an osmium complex, or a ruthenium complex can be employed as a mediator.

Carboxymethylcellulose, carboxyethylcellulose, polyethyleneimine, DEAE cellulose, dimethylaminoethyl dextran, carageenan, sodium alginate, or dextran can be employed as a thickening agent. A surfactant such as Triton X100 (manufactured by Sigma-Aldrich Co. LLC.), Tween 20 (manufactured by Tokyo Chemical Industry Co., Ltd.), or sodium bis(2-ethylhexyl)sulfosuccinate, or phosphoslipid such as lecithin can be employed as a hydrophilizing agent.

In order to lessen variation in concentration of ions contained in a blood sample, a buffer such as phosphoric acid may be provided. Reaction layer 103 should only be provided in cavity 104 as arranged downstream of a set of working electrode for determination 101a and counter electrode for determination 101b partially exposed at cavity 104, and a hydrophilizing agent alone is dropped onto working electrode for determination 101a and counter electrode for determination 101b. A thickening agent contained in reaction layer 103 prevents an enzyme or a mediator contained in reaction layer 103 from diffusing around working electrode for determination 101a and counter electrode for determination 101b when reaction layer 103 is dissolved in a blood sample supplied into cavity 104.

Cover layer 130 is formed from a substrate composed of polyethylene terephthalate, and in the substrate, air vent 106 communicating with cavity 104 at the time when it is stacked on spacer layer 120 is formed. After reaction layer 103 is formed on working electrode for quantification 102a and counter electrode for quantification 102b exposed at cavity 104, cover layer 130 is stacked on and bonded to spacer layer 120. Thus, sensor chip 100 having sample introduction port 104a communicating with cavity 104 formed at a tip end for supply of a blood sample into cavity 104 is formed.

In this embodiment, biosensor system 1 is formed for the purpose of quantification of glucose in blood. Reaction layer 103 containing glucose oxidase as an enzyme specifically reacting with glucose representing a substance to be determined and potassium ferricyanide as a mediator, which will be a reducing substance as a result of reduction by electrons generated through reaction between glucose representing a substance to be determined and glucose oxidase, is provided on working electrode for quantification 102a and counter electrode for quantification 102b exposed at cavity 104.

In sensor chip 100 thus constructed, by bringing a blood sample in contact with blood sample introduction port 104a at the tip end, the blood sample is attracted toward air vent 106 owing to a capillary phenomenon, so that the blood sample is supplied into cavity 104. Then, as reaction layer 103 is dissolved in the blood sample supplied into cavity 104, electrons are emitted through enzyme reaction between glucose representing a substance to be determined in the blood sample and glucose oxidase, emitted electrons reduce ferricyanide ions, and ferrocyanide ions representing a reducing substance are generated.

As the blood sample is supplied into cavity 104, determination instrument 2 determines a hematocrit value of a blood sample by measuring a response current resulting from sweep of a voltage applied across working electrode for determination 101a and counter electrode for determination 101b. Determination instrument 2 quantifies glucose in the blood sample by measuring an oxidation current which flows between working electrode for quantification 102a and counter electrode for quantification 102b by electrochemically oxidizing, by application of a voltage across working electrode for quantification 102a and counter electrode for quantification 102b of sensor chip 100, a reducing substance generated through oxidation reduction reaction resulting from solution of reaction layer 103 in the blood sample.

Though sensor chip 100 is formed to have a dual-electrode structure having working electrode for quantification 102a and counter electrode for quantification 102b in this embodiment, sensor chip 100 may be formed to have a triple-electrode structure by further providing a reference electrode. In this case, while counter electrode for quantification 102b is grounded and a reference potential is applied to the reference electrode from voltage output portion 9, a prescribed potential referenced to counter electrode for quantification 102b should only be applied to working electrode for quantification 102a.

Though supply of a blood sample into cavity 104 is detected by monitoring a current which flows between working electrode for determination 101a and counter electrode for determination 101b as a result of application of a prescribed voltage across working electrode for determination 101a and counter electrode for determination 101b in this embodiment, supply of the blood sample into cavity 104 provided in sensor chip 100 may be detected similarly by monitoring a value for a current which flows between working electrode for quantification 102a and counter electrode for quantification 102b. Alternatively, supply of a blood sample into cavity 104 may be detected by further providing an electrode for sensing a blood sample and monitoring a current which flows between counter electrode for determination 102b or counter electrode for quantification 102b and the electrode for sensing the blood sample as a result of application of a prescribed voltage across counter electrode for determination 101b or counter electrode for quantification 102b and the electrode for sensing the blood sample. At least cover layer 130 among electrode layer 110, spacer layer 120, and cover layer 130 forming sensor chip 100 is desirably formed from a transparent member such that supply of the blood sample into cavity 104 can visually be recognized.

### <Principles in Determining Hematocrit Value>

Principles in determining a hematocrit value of a blood sample supplied into cavity 104 of sensor chip 100 will now be described.

As shown in Figs. 4 and 5, followability of a response current obtained at the time when a voltage applied across working electrode for determination 101a and counter electrode for determination 101b is swept, to temporal change in swept applied voltage is dependent on a hematocrit value of a blood sample. Namely, followability of the response current resulting, for example, from sweep of a voltage applied across working electrode for determination 101a and counter electrode for determination 101b for 0.1 second at a rate of increase of 20 V/second as linearly increasing in a positive direction, to temporal change in swept applied voltage as shown in Fig. 4 is best at the time when the hematocrit value is 0% (hollow diamond in Fig. 5), and it becomes poorer as the hematocrit value increases from 20% (hollow square in Fig. 5) → 40% (hollow triangle in Fig. 5) → 60% (cross in Fig. 5) as shown in Fig. 5.

Therefore, by measuring in advance relation between a response current resulting from sweep of a voltage applied across working electrode for determination 101a and counter electrode for determination 101b and a hematocrit value, a hematocrit value of a blood sample can be determined by measuring an actual response current at the time when the blood sample is supplied into cavity 104 of sensor chip 100.

In measuring a response current for determining a hematocrit value, a voltage applied to working electrode for determination 101a and counter electrode for determination 101b is desirably monotonously increased in the positive direction. By doing so, generation of a current owing to electrochemical reaction of various substances in a blood sample caused by application of a high voltage from the beginning across these electrodes 101a and 101b can be prevented, and hence a capacitive current which flows between working electrode for determination 101a and counter electrode for determination 101b can accurately be measured as a response current.

Specifically, a voltage applied across working electrode for determination 101a and counter electrode for determination 101b can
a) increase linearly,
b) increase at a rate of increase of tⁿ (t: time, n: constant) with respect to an initial potential,
c) increase at a rate of increase of a^{t} (t: time, a: constant) with respect to an initial potential,
d) increase at a rate of increase of ln(t) (t: time) with respect to an initial potential,
e) increase at a rate of increase of sin(at) (t: time, a: constant, 0<at<π/2) with respect to an initial potential,
f) increase at a rate of increase of a) to e) by approximation with rectangular waves, or
g) increase as rates of increase of a) to e) being combined, however, an applied voltage may increase in any manner.

For example, as in a), by sweeping an applied voltage such that it linearly increases, a voltage applied across working electrode for determination 101a and counter electrode for determination 101b can readily be swept by voltage output portion 9 inexpensive and simple in circuit configuration, which is practical.

For example, by sweeping a voltage applied across these electrodes 101a and 101b such that it rapidly and linearly increases at a rate of increase in a range from 1 V/second to 100 V/second, influence by red blood cells slow in moving speed in a blood sample more effectively appears in followability of a response current, and hence accuracy in determination of a hematocrit value based on measurement of a response current can be improved.

Though a hematocrit value can be determined by using a current value of a response current at the timing when a voltage applied as swept across working electrode for determination 101a and counter electrode for determination 101b attains to a prescribed voltage value, such as a current value of a response current at the timing when an applied voltage attains to 2.0 V which is equal to or higher than a decomposition voltage of water, a hematocrit value may be determined based on a rate of increase in or a ratio of current values of the response current at least at two time points.

Then, though a response current contains various background components different from a current component dependent on a hematocrit value, influence by the background components contained in the response current can be removed by deduction, by calculating a hematocrit value based on a rate of increase in current value of the response current at least at two time points.

Though a response current contains an error component dependent on an ambient temperature, temperature-dependent characteristics of the response current do not change even though a voltage applied to both electrodes 101a and 101b is swept. Therefore, an error component dependent on an ambient temperature, which is contained in the response current, can be removed by calculating a hematocrit value based on a ratio of current values of the response current at least at two time points.

In calculating a hematocrit value based on a ratio of current values of the response current at least at two time points, desirably, at least one of the current values is a measurement value at the time when the applied voltage is lower than a decomposition voltage of water and at least one thereof is a measurement value at the time when the applied voltage is equal to or higher than the decomposition voltage of water. Then, as a ratio of a current component resulting from electrolysis of water is higher, a current component dependent on a hematocrit value, which is contained in the response current in particular at the time when the applied voltage is lower than the decomposition voltage of water, can more effectively be measured, and accuracy in determining a hematocrit value can be improved.

In determining a hematocrit value based on one current value of a response current at prescribed timing, a current value of the response current increases if a voltage applied across both electrodes 101a and 101b is equal to or higher than a decomposition voltage of water, that is, equal to or higher than 1 V. Therefore, a hematocrit value can more accurately be determined.

When a voltage applied across both electrodes 101a and 101b is equal to or higher than the decomposition voltage of water, a current value of a response current increases. For example, by determining a hematocrit value based on a rate of increase in response current at the time when an applied voltage increases from 1.8 V to 2.0 V, a hematocrit value can more accurately be determined. In determining a hematocrit value based on a ratio between current values of the response current at two or more time points, as described above, a hematocrit value is desirably determined based on a ratio between a current value of a response current at the time when a voltage applied across both electrodes 101a and 101b is lower than a decomposition voltage of water, for example, when it is 0.5 V, and a current value of a response current at the time when an applied voltage is equal to or higher than the decomposition voltage of water, for example, when it is 2.0 V.

### <Measurement Processing>

One example of measurement processing for quantifying glucose in a blood sample performed in biosensor system 1 will now be described. As a not-shown detection circuit detects attachment of sensor chip 100 to determination instrument 2, a voltage for sensing a blood sample for detecting supply of a blood sample into cavity 104 of sensor chip 100 is applied across working electrode for determination 101a and counter electrode for determination 101b (step S1). Then, as the blood sample is supplied into cavity 104 and liquid junction between working electrode for determination 101a and counter electrode for determination 101b by the blood sample is established, a current which flows between working electrode for determination 101a and counter electrode for determination 101b increases and hence change in resistance value is sensed. Thus, detection portion 8a detects supply of the blood sample into cavity 104 (step S2).

When detection portion 8a detects supply of the blood sample into cavity 104, voltage output portion 9 applies a voltage for determining a hematocrit value (Hct) across working electrode for determination 101a and counter electrode for determination 101b (step S3) and measurement portion 8c measures a response current at prescribed timing (step S4).

Then, voltage output portion 9 applies a voltage (for example, 0.3 V) for determining a concentration of glucose (a blood glucose value) across working electrode for quantification 102a and counter electrode for quantification 102b (step S5), and measurement portion 8c measures a current value of an oxidation current after lapse of a prescribed time period (3 to 5 seconds) since application of the voltage (step S6).

Then, quantification portion 8d derives a hematocrit value based on the measured current value of the response current, quantification portion 8d quantifies glucose contained in the blood sample based on the derived hematocrit value and the measured current value of the oxidation current and on the conversion formula stored in storage portion, and notification portion 8e gives notification of a result of determination. Thus, the processing ends.

As above, a response current resulting from sweep of a voltage applied across working electrode for determination 101a and counter electrode for determination 101b included in sensor chip 100 is measured, and a hematocrit value is derived based on followability of a response current to temporal change in swept applied voltage. Therefore, it is not necessary to stand by until oxidation reduction reaction of an oxidation reducing substance is stabilized for determining a hematocrit value as in a conventional method of determining a hematocrit value, and a hematocrit value of a blood sample can be determined in a short period of time. Since no oxidation reducing substance is necessary for determining a hematocrit value, a hematocrit value can be determined with low cost.

Since a substance to be determined is quantified based on a hematocrit value and an oxidation current of a reducing substance, the substance to be determined can accurately be quantified, with influence by the hematocrit value of the blood sample being removed. Since a hematocrit value of a blood sample is determined in a short period of time and no oxidation reducing substance is necessary for determining a hematocrit value, a substance to be determined in a blood sample can be quantified based on a hematocrit value in a short period of time with low cost.

An electrode system including working electrode for determination 101a and counter electrode for determination 101b as well as working electrode for quantification 102a and counter electrode for quantification 102b is provided on electrode layer 110 of sensor chip 100 such that each electrode 101a, 101b, 102a, 102b is partially exposed at cavity 104. Therefore, sensor chip 100 capable of measuring a response current resulting from sweep of a voltage applied across working electrode for determination 101a and counter electrode for determination 101b and determining a hematocrit value of a blood sample in a short period of time with low cost based on followability of a response current to temporal change in swept applied voltage can be provided.

A set of working electrode for determination 101a and counter electrode for determination 101b of sensor chip 100 is arranged on an upstream side closer to sample introduction port 104a, a set of working electrode for quantification 102a and counter electrode for quantification 102b is arranged on a downstream side farther from sample introduction port 104a, and reaction layer 103 containing an enzyme specifically reacting with a substance to be determined which is contained in a blood sample is provided in cavity 104 as arranged on downstream of the set of working electrode for determination 101a and counter electrode for measurement 101b. Therefore, since reaction layer 103 is arranged downstream of working electrode for determination 101a and counter electrode for determination 101b at the time when the blood sample is supplied into cavity 104 through sample introduction port 104a, influence by a substance generated as a result of solution of reaction layer 103 in the blood sample on determination of a hematocrit value through application of a voltage across working electrode for determination 101a and counter electrode for determination 101b can be suppressed.

The present invention is not limited to the embodiment described above, and various modifications other than the above can be made without departing from the spirit thereof. For example, an ethanol sensor or a lactate sensor may be formed by changing combination with an enzyme and a mediator to be contained in reaction layer 103 of sensor chip 100 described above. Reaction layer 103 does not necessarily have to contain a mediator. In this case, an oxidation current resulting from oxidation of a reducing substance such as hydrogen peroxide or a reductant of an enzyme produced through enzyme reaction of a substance to be determined such as glucose should only be measured.

Timing of measurement and magnitude of an applied potential in the embodiment above are merely by way of example, and an optimal value should only be set as appropriate such that sufficient magnitude of a response current and an oxidation current is measured in accordance with a type of a substance to be determined or a type of an enzyme or a mediator to be contained in reaction layer 103.

### INDUSTRIAL APPLICABILITY

The present invention can be applied to a method of determining a hematocrit value for determination with the use of various sensor chips and a quantitative analysis method.

### REFERENCE SIGNS LIST

100 sensor chip; 101a working electrode for determination; 101b counter electrode for determination; 102a working electrode for quantification; 102b counter electrode for quantification; 103 reaction layer; 104 cavity; 104a sample introduction port; 105 slit; 110 electrode layer; 120 spacer layer; and 130 cover layer.

## Claims

1. A method of determining a hematocrit value of a blood sample by using a sensor chip including an electrode system including a working electrode for determination and a counter electrode for determination, comprising:
measuring a response current obtained by sweeping a voltage applied across said working electrode for determination and said counter electrode for determination; and
deriving a hematocrit value based on followability of said response current to temporal change in swept applied voltage.

2. The method of determining a hematocrit value according to claim 1, wherein
said applied voltage is swept such that the applied voltage increases in a positive direction.

3. The method of determining a hematocrit value according to claim 1 or 2, wherein
said hematocrit value is calculated based on a rate of increase in current value of said response current at least at two time points.

4. The method of determining a hematocrit value according to claim 1 or 2, wherein
said hematocrit value is calculated based on a ratio of current values of said response current at least at two time points.

5. The method of determining a hematocrit value according to claim 4, wherein
at least one of said current values is a measurement value at time when said applied voltage is lower than a decomposition voltage of water and at least one of said current values is a measurement value at time when said applied voltage is equal to or higher than said decomposition voltage of water.

6. The method of determining a hematocrit value according to any of claims 1 to 5, wherein
said applied voltage is swept such that the applied voltage linearly increases.

7. The method of determining a hematocrit value according to claim 6, wherein
said applied voltage is swept such that the applied voltage linearly increases at a rate of increase in a range from 1 V/second to 100 V/second.

8. A quantitative analysis method, comprising the steps of:
determining a hematocrit value of a blood sample by using the method of determining a hematocrit value according to any of claims 1 to 7;
measuring an oxidation current resulting from oxidation, by applying a voltage across a working electrode for quantification and a counter electrode for quantification in said electrode system, of a reducing substance generated through reaction between a substance to be determined in said blood sample and a reaction layer containing an enzyme specifically reacting with said substance to be determined; and
quantifying said substance to be determined based on said hematocrit value and said oxidation current.

9. A sensor chip formed by stacking an electrode layer, a cover layer, and a spacer layer arranged between the electrode layer and the cover layer, comprising:
a cavity formed by said electrode layer and said cover layer and by a slit formed in said spacer layer; and
a sample introduction port communicating with said cavity,
said electrode layer being provided with an electrode system including a working electrode for determination and a counter electrode for determination as well as a working electrode for quantification and a counter electrode for quantification such that each said electrode is partially exposed at said cavity, and
a set of said working electrode for determination and said counter electrode for determination being arranged on an upstream side closer to said sample introduction port, a set of said working electrode for quantification and said counter electrode for quantification being arranged on a downstream side farther from said sample introduction port, and a reaction layer containing an enzyme specifically reacting with a substance to be determined which is contained in a blood sample being provided in said cavity as arranged downstream of the set of said working electrode for determination and said counter electrode for determination.
